# EUROPÄISCHE PATENTSCHRIFT

(11) **EP 1 935 674 B1**
(45) Veröffentlichungstag und Bekanntmachung des Hinweises auf die Patenterteilung: **08.07.2009**
(21) Anmeldenummer: 07450216.2
(22) Anmeldetag: 27.11.2007
(51) Int. Cl.: B60C 27/10

(54) **Spannvorrichtung für eine Gleitschutzkette**
Tension device for an anti-skid chain
Dispositif de serrage pour une chaîne antidérapante

(30) Priorität: 21.12.2006 AT 21192006
(43) Veröffentlichungstag der Anmeldung: 25.06.2008
(73) Patentinhaber: Pewag Schneeketten GMBH & Co KG, 8020 Graz (AT)
(72) Erfinder: Pengg, Ägyd, 9020 Klagenfurt (AT)
(74) Vertreter: Forsthuber, Martin

(56) Entgegenhaltungen:
- WO-A-20/04022363
- AT-B- 408 635
- AT-U1- 6 475
- DE-B3-2102004 037 33

## Beschreibung

Die Erfindung betrifft eine Spannvorrichtung für eine Gleitschutzkette mit einem Gehäuse und einem Betätigungsglied, das zumindest eine Blockierpositionen für einen durch eine Gehäuseöffnung in das Gehäuse einziehbaren Spannstrang aufweist, der innerhalb des Gehäuses an eine in Aufwickelrichtung vorgespannte und um ihre Achse drehbar gelagerte Wickelrolle angeschlossen ist.

Spannvorrichtungen werden bei Gleitschutzketten, insbesondere Schneeketten, verwendet, um nach der Montage ein unerwünschtes Rücklaufen des Spannstranges entgegen der Spannrichtung zu vermeiden. Der Spannstrang ist zumeist ein Spannseil, kann jedoch auch z.B. als Spannkette ausgebildet sein.

Die AT 408 635 B beschreibt eine Spannvorrichtung mit einem Betätigungsglied mit drei Stellungen. Zwei miteinander drehfest verbundene Klinkenräder sind jeweils Sperrklinken zugeordnet und weisen gegenläufige Sperrrichtungen auf. Das Betätigungsglied wirkt auf die zwei Sperrklinken, wobei in einer ersten Raststellung die eine Sperrklinke in das ihr zugeordnete Klinkenrad eingreift, während in einer zweiten Raststellung die andere Sperrklinke in das ihr zugeordnete Klinkenrad eingreift, sodass die Bewegung in bzw. gegen die Spannrichtung freigegeben und in bzw. gegen die Gegenrichtung blockiert ist; in einer dritten Stellung, einer dazwischen einstellbaren Freigabestellung, greift keine der Sperrklinken ein und die Blockierung ist aufgehoben.

Die AT 006 475 U1 beschreibt eine Spannvorrichtung mit einem Klinkenrad und einer ihm zugeordneten, mittels eines Betätigungsgliedes betätigbaren Sperrklinke, wobei das Betätigungsglied bezüglich des Gehäuses verschiebbar ist und drei Stellungen aufweist, allerdings neben einer Blockierstellung, in der der Spannstrang bzw. das Klinkenrad vollständig blockiert ist, eine Haltestellung, in der das Klinkenrad in Aufwickelrichtung des Spannstranges drehbar ist, und eine Freigabestellung, worin die Blockierung gänzlich aufgehoben ist. Eine abwechselnde Blockierung einmal für die eine, einmal für die andere Richtung kann diese Vorrichtung somit nicht leisten.

Die gattungsbildende DE 10 2004 037 332 B3 stellt eine Spannvorrichtung für eine Gleitschutzkette vor, bei der zwei Spannstränge vorgesehen sind. Ein Blockierorgan und ein dazu symmetrisches Bremsorgan wirken auf die Außenfläche eines Rades und hemmen die Drehung des Rades in die eine bzw. die andere Richtung, bewirken jedoch keine effektive Verringerung einer Einzugsgeschwindigkeit.

Bei diesen Spannvorrichtungen wird der Spannstrang durch die Federkraft eingezogen. Hierbei besteht die Gefahr, dass besonders beim Einziehen einer größeren Stranglänge eine große Einzugsgeschwindigkeit erreicht wird, was zu einer Verletzungsgefahr für den Benutzer führt, wie z.B. Schneid- oder Schlagverletzungen (durch das Strangende) der Finger.

Es ist Aufgabe der Erfindung, die genannten Nachteile zu überwinden und eine Spannvorrichtung zu schaffen, die ein ruhiges Einziehen des Spannstranges zeigt. Ein darüber hinaus gehendes Ziel ist es, zwei Sperrstellungen zu schaffen, bei denen jeweils die Bewegung des Spannstranges in eine Richtung zugelassen und die andere Richtung blockiert ist.

Die gestellte Aufgabe wird von einer Spannvorrichtung der eingangs beschriebenen Art mittels einer Dämpfungseinrichtung gelöst, die ein mit der Wickelrolle getriebemäßig verbundenes Radelement aufweist, das mit einem den Freilauf der Wickelrolle zumindest in Aufwickelrichtung bremsenden Bremsmittel drehfest verbunden ist. Die drehfeste Verbindung schließt den Spezialfall ein, dass das Radelement mit dem Bremsmittel einstückig ist. Günstiger Weise ist das Bremsmittel so ausgelegt, dass es eine mit der Drehgeschwindigkeit überproportional zunehmende und/oder oberhalb eines spezifischen Schwellenwerts der Drehgeschwindigkeit einsetzende Bremswirkung aufweist.

In einer bevorzugten Ausführungsform der Erfindung ist das Bremsmittel als hydraulischer Drehdämpfer ausgebildet. In einer alternativen Ausführungsform ist das Bremsmittel als mit dem Radelement verbundenes Exzenterelement ausgebildet, das bei einer Drehbewegung infolge Fliehkraftwirkung nach außen unter elastischer Verformung ausgelenkt wird, wobei es bei ausreichender Auslenkung mit einer im Umgebungsbereich des Bremsmittels fest angeordneter Gegenfläche in reibenden Kontakt tritt. Besonders die letztere Variante ermöglicht eine unproblematische und wartungsfreundliche Realisierung der Erfindung.

In einer besonders einfachen und wirkungsvollen Getriebeverbindung zwischen Radelement und Wickelrolle kann das Radelement ein Zahnrad sein, das mit einem Zahnradkranz, vorzugsweise Innenzahnkranz, der Wickelrolle zusammenwirkt.

Als weiteren Schutz gegenüber Bedienfehlern kann das Betätigungsglied zumindest zwei Blockierpositionen für den Spannstrang aufweisen, wobei in einer ersten Blockierposition der Spannstrang gegen Bewegung in seiner Spannrichtung blockierbar ist und in einer zweiten Blockierposition gegen Bewegung entgegen seiner Spannrichtung, wobei an der Wickelrolle ein Zahnkranz mit einer ihm zugeordneten Sperrklinke vorgesehen ist, die mittels des Betätigungsgliedes zwischen zwei den Blockierpositionen entsprechende Endstellungen bewegbar ist. In diesem Fall ist es des Weiteren günstig, wenn die Sperrklinke in jeder Endstellung mit jeweils zumindest einer Auflauffläche in denselben Zahnkranz eingreift, wobei die zumindest eine Auflauffläche zumindest eine Zahnflanke des Zahnkranzes abstützt (nämlich, als Auflagefläche wirkt) und die Bewegung des Zahnkranzes in dieser Zahnflankenrichtung hemmt, wobei verschiedenen Endstellungen zugeordnete Auflaufflächen jeweils mit Zahnflanken verschiedener Orientierung (nämlich in bzw. gegen die Aufwickelrichtung) zusammenwirken. In einer besonders kompakte Bauweise hemmt die Sperrklinke die Bewegung des Zahnkranzes in Richtung der der Sperrklinke zugewandten Zahnflanken. Es ist weiters günstig im Sinne einer verbesserten Betriebssicherheit, wenn das Betätigungsglied als mit der Sperrklinke drehfest verbundener Hebel ausgebildet ist.

Durch diese weiter gehende Lösung gelingt die Realisierung zweier entgegen gesetzt gerichteter Blockierungen auf einfache und doch effiziente Weise. Im Gegensatz zu herkömmlichen Vorrichtungen ermöglicht die Erfindung die Verwendung eines einzelnen Klinkenelements, das mit zwei an verschiedenen Stellen angeordneten Auflaufflächen in denselben Zahnkranz einwirkt, und somit die Anzahl der Komponenten deutlich reduziert.

Es vereinfacht den Aufbau der Spannvorrichtung zusätzlich, wenn sich die beiden Blockierrichtungen zueinander symmetrisch verhalten, somit die Auflaufflächen der Sperrklinke zueinander spiegelsymmetrisch sind und der Zahnkranz zueinander spiegelsymmetrische Zahnflanken aufweist.

Günstiger Weise ist die Steilheit der Zahnflanken so gewählt, dass bei Aufliegen einer Zahnflanken auf einer zugeordneten Auflauffläche Selbsthemmung der Radbewegung in Richtung der Zahnflankenorientierung eintritt.

Die Erfindung samt ihren Vorzügen und vorteilhaften Ausgestaltungen wird im Folgenden anhand eines nicht einschränkenden Ausführungsbeispiels näher erläutert, das in den beigefügten Zeichnungen dargestellt ist. Die Figuren zeigen
- Fig. 1: eine erfindungsgemäße Spannvorrichtung in erster Blockierstellung in Seitenansicht,
- Fig. 2: die geöffnete Spannvorrichtung,
- Fig. 3: die geöffnete Spannvorrichtung in zweiter Blockierstellung,
- Fig. 4: die Spannvorrichtung in explodierter Darstellung,
- Fig. 4a: ein Detailausschnitt der unteren Gehäuseschale mit der zur Aufnahme des Bremszahnrads vorgesehenen Ausnehmung,
- Fig. 5 und 6: das Bremszahnrad einer ersten Ausführungsform in zwei Schrägansichten auf die Unterseite,
- Fig. 7: das Bremszahnrad der Fig. 5 und 6 in Aufsicht,
- Fig. 8: das Bremszahnrad einer zweiten Ausführungsform in einer Schrägaufsicht, und
- Fig. 9a und: 9b je eine Seiten- und Aufsicht des Bremszahnrads der Fig. 8.

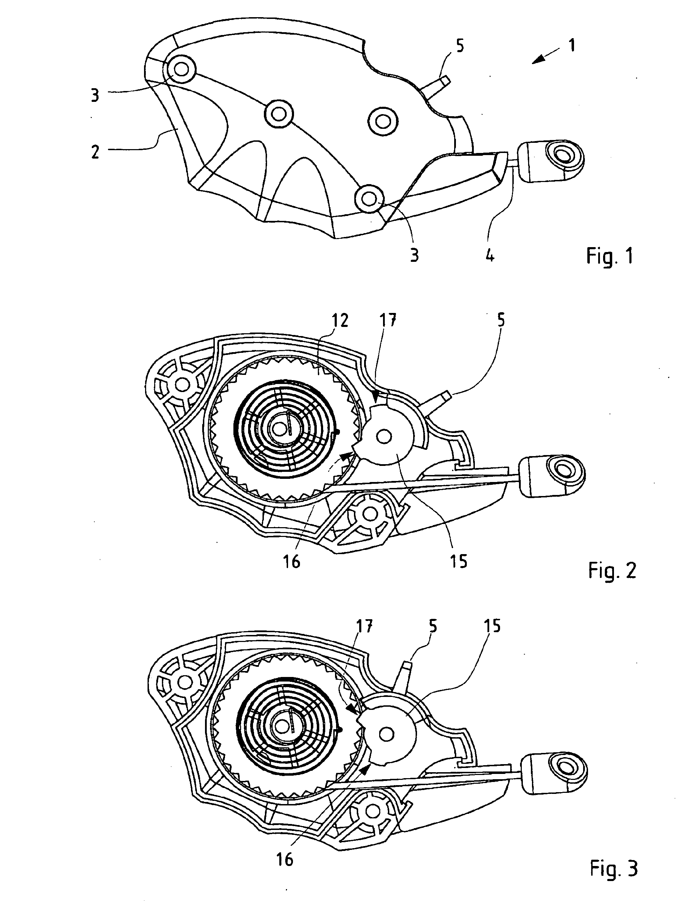

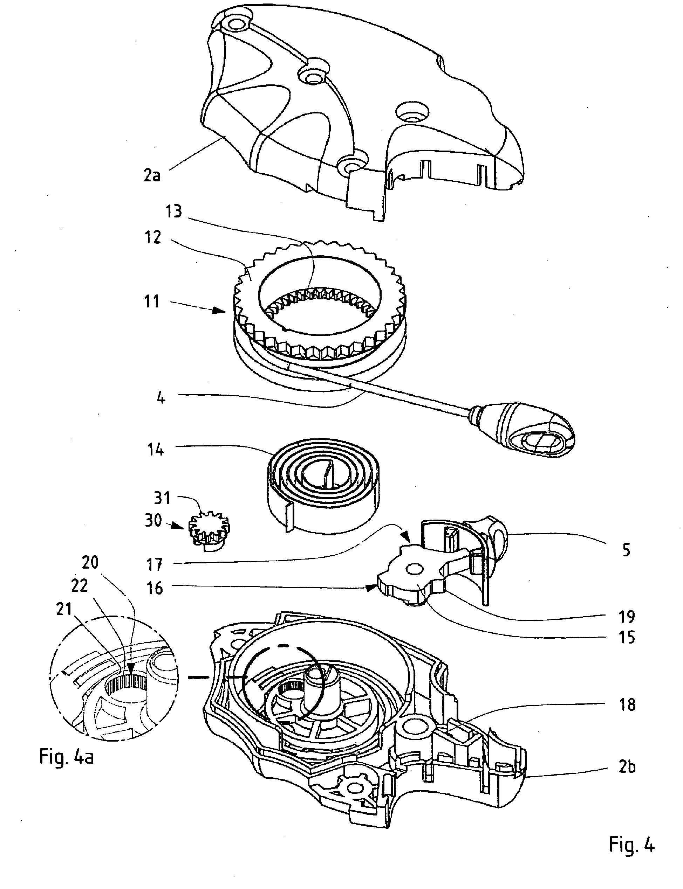

Gemäß Fig. 1 weist eine erfindungsgemäße Spannvorrichtung 1 ein Gehäuse 2 (bestehend aus zwei Gehäuseschalen 2a,2b - vgl. Fig. 4) auf, an dem mittels Haltevorrichtungen 3 z.B. in Form von Ösen oder Bohrungen (nicht gezeigte) Stifte und/ oder Haken mit daran einhängbaren Ketten/Seilen befestigt werden können. Ein Spannseil 4, das zum Spannen einer Gleitschutzkette oder Schneekette verwendet werden kann, ist im Inneren der Spannvorrichtung 1 aufgerollt; mittels eines oben aus einer Öffnung des Gehäuses ausgeführten Hebels 5, der Teil des Betätigungsglieds im Sinne der Erfindung ist, kann je nach Bedarf festgelegt werden, in welche gewünschte Richtung das Spannseil freigegeben ist, während zugleich eine Bewegung in die entgegen gesetzte Richtung blockiert ist. In Fig. 1 ist beispielhaft jene Stellung gezeigt, in der das Spannseil 4 eingezogen werden kann, während ein Herausziehen des Seiles blockiert ist.

Der innere Aufbau geht aus Fig. 2 und 3 sowie der explodierten Darstellung der Fig. 4 hervor. Zum Aufwickeln des Spannseiles 4 ist eine Seilrolle 11 mit einem drehfest verbundenen Zahnkranz 12 vorgesehen; zu diesem Zweck ist die Seilrolle 11 mit einer Feder 14 in Aufwickelrichtung vorgespannt.

Zum Blockieren des Spannseiles 4 in eine Richtung und Freigabe in die entsprechende Gegenrichtung weist die Seilrolle 11 einen mit ihr drehfest verbundenen Zahnkranz 12 auf. Gemäß der Erfindung werden beide Flanken der Zähne des Zahnkranzes 12 zum wahlweisen Hemmen der Seilbewegung genützt. Dazu können die Zähne wie in der gezeigten Ausführungsform symmetrisch sein, was die Konstruktion zusätzlich vereinfacht. Eine neben dem Zahnkranz angeordnete Klinke 15 weist zwei Endpositionen (Fig. 2 bzw. Fig. 3) auf, die jeweils einer Blockierposition entsprechen und mit dem Hebel 5 einstellbar sind. In jeder Endposition greift die Klinke jeweils in den Zahnkranz ein und wirkt mit den Zahnflanken eines Typs (nämlich in Fig. 2 mit den gegen den Uhrzeigersinn orientierten Flanken, in Fig. 3 jenen im Uhrzeigersinn) über eine entsprechende Auflauffläche 16,17 an der Außenseite der Klinke zusammen. Mithilfe der Klinke 15 wird die Richtung festgelegt, in welche die Seilrolle bewegbar ist, während sie in der Gegenrichtung sperrt. Wie bereits erwähnt, erfolgt die Betätigung der Klinke 15 über den Hebel 5 des mit ihr einstückigen bzw. drehfest verbundenen Betätigungsglieds.

Bei der Bewegung des Spannseiles in der zugelassenen Richtung hebt der Zahnkranz 12 bei jeder Zahnposition jeweils die eingreifende Auflauffläche der Klinke 15 ein wenig an, die sogleich beim Überschreiten des Zahnkopfes durch die Federkraft des nachfolgend erläuterten Halteelements 18 in den nächsten Zahnraum zurückspringt. In der Gegenrichtung ist die Bewegung dagegen selbsthemmend blockiert, weil der Zahnkranz mit der Auflaufflanke auf der Gegenfläche der Klinke abstützt und so die Bewegung hemmt.

Ein federndes Halteelement 18 dient dazu, die Klinke 15 in der jeweiligen Endstellung zu arretieren und zugleich das nötige Spiel für die Bewegung des Zahnkranzes in die zugelassene Richtung zu gewähren. Beispielsweise ist als Halteelement eine Zunge 18 vorgesehen, das in dem Schalenteil 2b gelenkig federnd gelagert ist und mit einer zusätzlichen, dem Laufrad abgewandten Stellnase 19 der Klinke zusammenwirkt. Die Stellnase 19 wird, wenn die Klinke von der einen Endposition in die andere bewegt wird, beim Erreichen der Endposition an der Zunge 18 vorbeigeführt, die dabei über die Stellnase 19 schnappt und diese so in der jeweiligen Endposition fixiert.

Weiterhin bezugnehmend auf Fig. 4 ist als Dämpfungseinrichtung im Sinne der Erfindung ein Bremsrad 30 vorgesehen, das als Radelement ein Zahnrad 31 aufweist, das mit einem zweiten Zahnkranz ("Bremszahnkranz") 13 der Seilrolle 11 zusammenwirkt. Vorzugsweise ist der Bremszahnkranz 13 als Innenzahnkranz ausgebildet und das Bremsrad 30 ist in einer Weise gelagert, dass sich seine Achse innerhalb des Umfangs der Seilrolle exzentrisch zu dieser befindet. Eine Drehung der Seilrolle 11 wird somit in eine Drehung des Bremsrads 30 als Ganzes umgesetzt. Eine Ausnehmung 20 in dem Schalenteil 2b dient als Lagerung des Bremsrads 30. Gemäß dem Detail der Fig. 4a ist ein Abschnitt 21 der Außenwand der Ausnehmung glatt (Zylindermantelfläche), während ein zweiter Abschnitt 22 der Außenwand eine Strukturierung, vorzugsweise Längsrillen, aufweist.

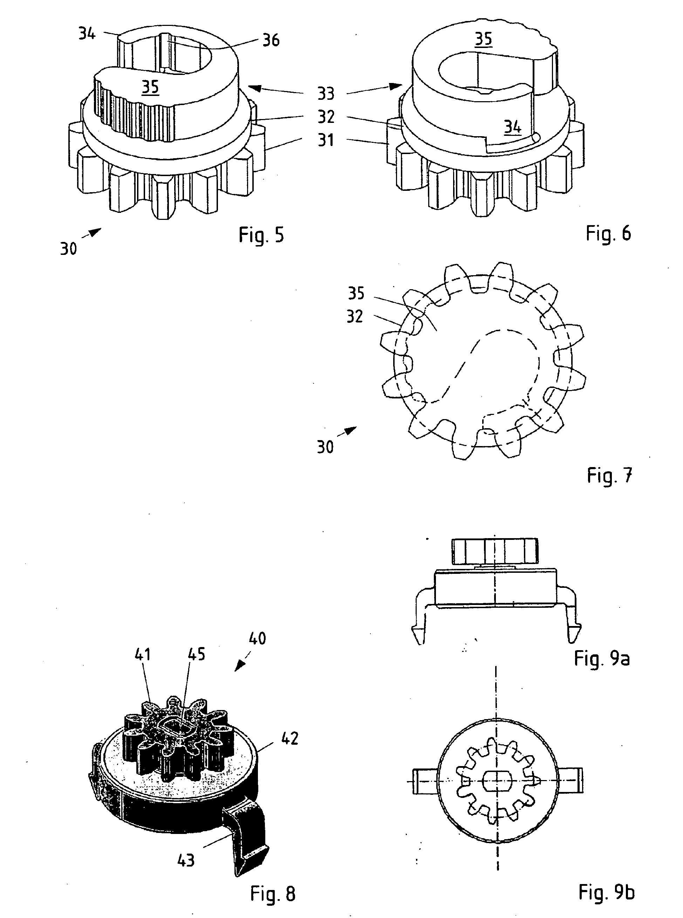

Das Bremsrad 30 ist in Fig. 5 und 6 in gegenüber der Fig. 4 umgedrehter Lage dargestellt. Das Zahnrad 31 ist koaxial über einer Basisscheibe 32 angeordnet und ist mit dieser einstückig oder drehfest verbunden. An der Unterseite der Basisscheibe ist ein exzentrisches Bremselement 33 drehfest befestigt. (Die Begriffe Oberseite und Unterseite beziehen sich auf die Lage gemäß Fig. 4.) Die Basisscheibe 32 wirkt mit dem glatten Abschnitt 21 als Lager des Bremsrads 30 zusammen. Der Exzenter 33 ist in einen Ansatzteil 34, der mit der Basisscheibe über einen schmalen Bereich verbunden ist, und ein Gewichtsteil 35 gegliedert, das lediglich mit dem Ansatzteil 34, nicht jedoch mit der Basisscheibe 32 in Verbindung steht.

Wie auch aus der Aufsicht der Fig. 7 zu ersehen ist, ist das Gewichtsteil 35 exzentrisch geformt, vorzugsweise in einer C-artigen Form, die gänzlich innerhalb des Radius der Basisscheibe 32 verläuft, damit im gezeigten Ruhezustand das Element 33 nicht mit der Außenwand 22 in Kontakt kommt, wobei das eine Ende des C an dem Ansatzteil befestigt und das andere, freie Ende verdickt ist. Das freie Ende trägt an seiner Außenseite Strukturen, vorzugsweise längs der Drehachse verlaufende Rillen. Diese entsprechen den Strukturen der Außenwand 22, die als Gegenfläche des Exzenters 33 dient, und zwar gelangen bei ausreichender Auslenkung des Gewichtsteils 35 dessen Strukturen mit jener der Außenwand 22 in Kontakt, sodass infolge der sich dadurch ergebenden Reibung eine Drehbewegung des Bremsrads 30 gedämpft oder sogar gehindert wird.

Infolge der Elastizität des Materials des Elements 33 ergibt sich eine gewisse Beweglichkeit des Gewichtsteils 35 unterhalb der Basischeibe 32 gegenüber der Drehachse. Die Verbindungsstelle zwischen Ansatz- und Gewichtsteil kann zusätzlich zur besseren Beweglichkeit des Gewichtsteils eine Kerbe 36 aufweisen und so Gelenkscharakter haben.

Bei einer Rotationsbewegung des Bremsrads 30 weicht das Gewichtsteil 35 in zentrifugaler Bewegung nach außen aus und wird, wenn die Drehgeschwindigkeit ausreichend groß ist, soweit nach außen gebogen, dass seine Rillen jene der Außenwand 22 berühren. Dann tritt infolge Reibung ein bremsender Effekt ein, der mit steigender Geschwindigkeit stark zunimmt. Bei geringerer Drehbewegung nimmt die Auslenkung des Gewichtsteils 35 elastisch ab, sodass wieder eine freie Bewegung zugelassen ist.

Auf diese Weise ergibt sich eine Bremswirkung, die erst ab einer gewissen Geschwindigkeit der Rollendrehung einstellt. Diese Geschwindigkeit kann durch eine geeignete Wahl der Kerbe 36 der Verbindungsstelle konstruktiv gewählt werden. Die Bremswirkung tritt bei Bewegungen in beide Richtungen ein, sodass sowohl ein zu schnelles Abrollen als auch ein zu schnelles Einziehen des Spannseiles 4 abgebremst wird.

Der untere Bereich des Bremszahnkranzes 13 liegt an der oberen Fläche der Basisscheibe 32 des Bremsrads 30 an, sodass ein Herauswandern des Bremsrads 30 aus seinem Lager verhindert wird. Zusätzlich wird ein Herausheben des Bremsrads 30 durch die Feder 14 verhindert, die am Zahnkranz des Bremsrads anliegen kann.

In einer zweiten Ausführungsform der Erfindung wird anstelle eines mittels Zentrifugalkraft wirkenden Bremsrads ein hydraulisch wirkendes Dämpfungsmittel eingesetzt. Ein Dämpfer 40 dieser Art ist in Fig. 8, 9a und 9b gezeigt. Der Körper 42 des Dämpfers 40 umgibt einen flüssigkeitsgefüllten Hohlraum; ein beweglicher Teil 45 ragt einerseits in diesen Hohlraum hinein, weist andererseits vorzugsweise einstückig ein Zahnrad 41 auf, das wiederum von dem Bremszahnkranz 13 der Seilrolle 11 angetrieben wird. Der Dämpferkörper 42 ist mittels Befestigungselemente wie z.B. Klammern 43 an dem Gehäuse 2b befestigt. Bei einer Drehung der Seilrolle wird der bewegliche Teil des Dämpfers 40 in Bewegung versetzt. Hierbei kommt es zu einer Bremswirkung, die bei zunehmender Geschwindigkeit infolge der Viskosität der Flüssigkeit nicht-linear zunimmt, sodass bei langsamer Bewegung des Seiles kaum Widerstand spürbar ist, eine zu schnelle Bewegung jedoch rasch heruntergebremst wird.

## Patentansprüche

1. Spannvorrichtung (1) für eine Gleitschutzkette mit einem Gehäuse (2a,2b) und einem Betätigungsglied (5), das zumindest eine Blockierpositionen für einen durch eine Gehäuseöffnung in das Gehäuse einziehbaren Spannstrang (4) aufweist, der innerhalb des Gehäuses an eine in Aufwickelrichtung vorgespannte und um ihre Achse drehbar gelagerte Wickelrolle (11) angeschlossen ist,
**gekennzeichnet durch**
eine Dämpfungseinrichtung (30, 40), die ein mit der Wickelrolle (11) getriebemäßig verbundenes Radelement (31,41) aufweist, das mit einem den Freilauf der Wickelrolle (11) zumindest in Aufwickelrichtung bremsenden Bremsmittel (35, 45) drehfest verbunden ist.

2. Spannvorrichtung nach Anspruch 1, **dadurch gekennzeichnet, dass** das Bremsmittel (35, 42) eine mit der Drehgeschwindigkeit überproportional zunehmende und/oder oberhalb eines spezifischen Schwellenwerts der Drehgeschwindigkeit einsetzende Bremswirkung aufweist.

3. Spannvorrichtung nach Anspruch 1 oder 2, **dadurch gekennzeichnet, dass** das Bremsmittel (42) als hydraulischer Drehdämpfer ausgebildet ist.

4. Spannvorrichtung nach Anspruch 1 oder 2, **dadurch gekennzeichnet, dass** das Bremsmittel (35) als mit dem Radelement verbundenes Exzenterelement ausgebildet ist, das bei einer Drehbewegung infolge Fliehkraftwirkung nach außen unter elastischer Verformung ausgelenkt wird, wobei es bei ausreichender Auslenkung mit einer im Umgebungsbereich des Bremsmittels fest angeordneter Gegenfläche (22) in reibenden Kontakt tritt.

5. Spannvorrichtung nach einem der Ansprüche 1 bis 4, **dadurch gekennzeichnet, dass** das Radelement (31) ein Zahnrad ist, das mit einem Zahnradkranz (13), vorzugsweise Innenzahnkranz, der Wickelrolle (11) zusammenwirkt.

6. Spannvorrichtung nach einem der Ansprüche 1 bis 5, **dadurch gekennzeichnet, dass** das Betätigungsglied (5) zumindest zwei Blockierpositionen für den Spannstrang (4) aufweist, wobei in einer ersten Blockierposition der Spannstrang gegen Bewegung in seiner Spannrichtung blockierbar ist und in einer zweiten Blockierposition gegen Bewegung entgegen seiner Spannrichtung, wobei an der Wickelrolle ein Zahnkranz (12) mit einer ihm zugeordneten Sperrklinke (15) vorgesehen ist, die mittels des Betätigungsgliedes (5) zwischen zwei den Blockierpositionen entsprechende Endstellungen bewegbar ist.

7. Spannvorrichtung nach Anspruch 6, **dadurch gekennzeichnet, dass** die Sperrklinke in jeder Endstellung mit jeweils zumindest einer Auflauffläche (16,17) in den Zahnkranz eingreift, wobei die zumindest eine Auflauffläche zumindest eine Zahnflanke des Zahnkranzes abstützt und die Bewegung des Zahnkranzes in dieser Zahnflankenrichtung hemmt, wobei verschiedenen Endstellungen zugeordnete Auflaufflächen jeweils mit Zahnflanken verschiedener Orientierung zusammenwirken.

8. Spannvorrichtung nach Anspruch 6, **dadurch gekennzeichnet, dass** die Auflaufflächen der Sperrklinke (15) zueinander spiegelsymmetrisch sind und der Zahnkranz (12) zueinander spiegelsymmetrische Zahnflanken aufweist.

9. Spannvorrichtung nach Anspruch 7 oder 8, **dadurch gekennzeichnet, dass** die Steilheit der Zahnflanken so gewählt ist, dass bei Aufliegen einer Zahnflanken auf einer zugeordneten Auflauffläche Selbsthemmung eintritt.

## Claims

1. A tensioning device (1) for an anti-skid chain comprising a housing (2a, 2b) and an actuating member (5) having at least one locking position for locking a tensioning cord (4) which is capable of being retracted into the housing through an opening in the housing and which is connected inside the housing to a winding pulley (11) biased in the winding direction and mounted for rotation about its axis,
**characterized by**
a damper (30, 40), which has a wheel element (31, 41) drive-connected to said winding pulley (11), which is non-rotatably connected to a braking mechanism (34, 45), which brakes freewheeling of the winding pulley (11) at least in the winding direction.

2. The tensioning device as defined in claim 1, **characterized in that** said braking mechanism (35, 42) has a braking effect which increases disproportionately with the rotational velocity and/or is exerted when a specific threshold of the rotational velocity is exceeded.

3. The tensioning device as defined in claim 1 or claim 2, **characterized in that** said braking mechanism (42) is configured as a hydraulic rotational damper.

4. The tensioning device as defined in claim 1 or claim 2, **characterized in that** said braking mechanism (35) is configured as an excentric element connected to said wheel element, which, with rotary motion, is outwardly deflected with resilient deformation, caused by centrifugal forces, and, with sufficient deflection, comes into frictional contact with a stationary counterface (22) disposed in the vicinity of the braking mechanism.

5. The tensioning device as defined in any one of claims 1 to 4, **characterized in that** said wheel element (31) is a gear wheel adapted to cooperate with a gear rim (13), preferably a gear rim having internal teeth, provided on said winding pulley (11).

6. The tensioning device as defined in any one of claims 1 to 5, **characterized in that** said actuating member (5) has at least two locking positions for locking the tensioning cord (4), wherein, in a first locking position, said tensioning cord can be prevented from moving in its tensioning direction and, in a second locking position, from moving contrary to its tensioning direction, said winding pulley being provided with a gear rim (12) and an assigned pawl (15), which can be moved by means of said actuating member (5) between two end positions corresponding to the locking positions.

7. The tensioning device as defined in claim 6, **characterized in that** said pawl engages, in each end position, with at least one stop face (16, 17) in said gear rim, wherein at least one stop face bears against at least one tooth flank of said gear rim and prevents said gear rim from moving in the direction toward this tooth flank, and said stop faces assigned to different end positions always cooperate with tooth flanks of different orientation.

8. The tensioning device as defined in claim 6, **characterized in that** said stop faces of said pawl (15) are mirror-symmetric with respect to each other and said gear rim (12) has tooth flanks that are mirror-symmetric with respect to each other.

9. The tensioning device as defined in claim 7 or claim 8, **characterized in that** the slope of said tooth flanks is such that automatic locking occurs when a tooth flank bears against an assigned stop face.

## Revendications

1. Dispositif de serrage (1) pour une chaîne antidérapante avec un boîtier (2a, b) et un organe d'actionnement (5) qui présente au moins une position de blocage pour un câble de serrage (4) intégrable par une ouverture de boîtier dans le boîtier, lequel est raccordé dans le boîtier à une bobine (11) précontrainte dans le sens d'enroulement et logée à rotation autour de son axe,
**caractérisé par**
un dispositif d'amortissement (30, 40) qui présente un élément de roue (31, 41) relié par l'engrenage à la bobine (11), qui est relié de manière bloquée en rotation à un moyen de freinage (35, 45) freinant la course libre de la bobine (11) au moins dans le sens d'enroulement.

2. Dispositif de serrage selon la revendication 1, **caractérisé en ce que** le moyen de freinage (35, 42) présente une action de freinage croissant de manière surproportionnelle avec la vitesse de rotation et/ou débutant au-dessus d'une valeur seuil spécifique de la vitesse de rotation.

3. Dispositif de serrage selon la revendication 1 ou 2, **caractérisé en ce que** le moyen de freinage (42) est réalisé comme un amortisseur rotatif hydraulique.

4. Dispositif de serrage selon la revendication 1 ou 2, **caractérisé en ce que** le moyen de freinage (35) est réalisé comme un élément à excentrique relié à l'élément de roue, qui est dévié lors d'un mouvement de rotation du fait d'une action centrifuge vers l'extérieur avec déformation élastique, celui-ci entrant en contact de frottement en cas de déviation suffisante avec une contre-surface (22) disposée fixement dans la zone environnante du moyen de freinage.

5. Dispositif de serrage selon l'une quelconque des revendications 1 à 4, **caractérisé en ce que** l'élément de roue (31) est une roue dentée qui coopère avec une couronne de roue dentée (13), de préférence une couronne à denture intérieure, de la bobine (11).

6. Dispositif de serrage selon l'une quelconque des revendications 1 à 5, **caractérisé en ce que** l'organe d'actionnement(5) présente au moins deux positions de blocage pour le câble de serrage (4), dans lequel dans une première position de blocage, le câble de serrage peut être bloqué contre tout mouvement dans son sens de serrage et dans une seconde position de blocage, contre tout mouvement dans le sens de serrage contraire, dans lequel une couronne dentée (12) avec un cliquet d'arrêt (15) lui étant associé est prévue sur la bobine, laquelle peut être déplacée au moyen de l'organe d'actionnement (5) entre deux positions finales correspondant aux positions de blocage.

7. Dispositif de serrage selon la revendication 6, **caractérisé en ce que** le cliquet d'arrêt s'engage dans chaque position finale avec respectivement au moins une surface d'attaque (16, 17) dans la couronne dentée, dans lequel l'au moins une surface d'attaque appuie au moins un flanc denté de la couronne dentée et bloque le mouvement de la couronne dentée dans ce sens de flanc denté, dans lequel des surfaces d'attaque associées aux différentes positions finales coopèrent respectivement avec des flancs dentés d'orientation différente.

8. Dispositif de serrage selon la revendication 6, **caractérisé en ce que** les surfaces d'attaque du cliquet d'arrêt (15) sont symétriques l'une par rapport à l'autre et la couronne dentée (12) présente des flancs dentés symétriques les uns par rapport aux autres.

9. Dispositif de serrage selon la revendication 7 ou 8, **caractérisé en ce que** la pente des flancs dentés est choisie de sorte que lors de la pose d'un flanc denté sur une surface d'attaque associée, un blocage automatique se produise.
